# EUROPÄISCHE PATENTSCHRIFT

(11) **EP 3 589 530 B1**
(45) Veröffentlichungstag und Bekanntmachung des Hinweises auf die Patenterteilung: **04.01.2023**
(21) Anmeldenummer: 18701690.2
(22) Anmeldetag: 17.01.2018
(51) Int. Cl.: B62B 5/06, B62B 3/14

(54) **SCHIEBEGRIFFEINHEIT**
PUSH BAR UNIT
DISPOSITIF DE POIGNÉE

(30) Priorität: 02.03.2017 DE 102017104407
(43) Veröffentlichungstag der Anmeldung: 08.01.2020
(73) Patentinhaber: Wanzl GmbH & Co. KGaA, 89340 Leipheim (DE)
(72) Erfinder: GASCHE, Thomas, 89340 Leipheim (DE); STÖCKLE, Dieter, 89361 Landensberg (DE); TATIC, Aleksandar, 89075 Ulm (DE); HEUTSCHI, Patrick, 8122 Binz (CH)
(86) Internationale Anmeldenummer: PCT/EP2018/051054
(87) Internationale Veröffentlichungsnummer: WO 2018/157990

(56) Entgegenhaltungen:
- DE-A1- 19 734 865
- FR-A2- 2 470 720
- US-A1- 2001 047 569
- US-A1- 2007 024 029

## Beschreibung

Die vorliegende Erfindung betrifft eine Schiebegriffeinheit, insbesondere eine mehrteilige Schiebegriffeinheit, die wenigstens ein erstes und wenigstens ein zweites Endstück zum Befestigen des jeweiligen Endstücks an einen von Hand geführten Transportwagen aufweist.

Transportwagen für schwere und sperrige Güter, wie sie beispielsweise in einem Bau- oder Großmarkt zu finden sind, werden häufig mit aufragenden Griffen versehen. Diese erlauben es, eine natürlichere bzw. ergonomischere Handhaltung beim Bewegen des schwerbeladenen Transportwagens einzunehmen.

Des Weiteren finden aufragende Griffe für eine ergonomischere Handhaltung auch bereits bei Transportwagen in Einzelhandelsgeschäften Anwendung, die üblicherweise an den Enden einer sich horizontal erstreckenden Querstange angeordnet sind.

Aus der WO 2012/042033 A1 ist bereits ein Schiebegriff für einen Transportwagen bekannt, der neben einer quer bzw. horizontal verlaufenden Querstange auch aufragende Griffteile zu beiden Enden des Schiebegriffs aufweist, wobei diese Griffteile drehbar um eine Befestigungsachse gelagert sind und auch in einer Position fixiert werden können.

Aus der EP 0 985 200 B1 ist bereits ein Handgriff mit einem Mittelstück und mit zwei an den Enden des Mittelstücks befestigbaren Endstücken bekannt, wobei die Endstücke eine Einrichtung zur Befestigung an einem Transportwagen, wie einem Einkaufswagen, aufweisen.

Aus der US 2001/047569 A1 is bereits ein Schubkarrengriff-Adapter bekannt, der einen Adaptergriff mit einem proximalen Ende und einem distalen Ende mit einer annähernd rechtwinkligen Biegung dazwischen hat. Der Adaptergriff am proximalen Ende ist an einem Schubkarrengriff befestigbar. In einer Konfiguration wird eine Hülse auf das Ende des Schubkarrengriffs gesteckt und ein Griffbolzen durch den Adaptergriff zwischen dem distalen Ende und dem proximalen Ende eingeführt, um in die Hülse einzuschrauben. In einer alternativen Konfiguration hat der Adaptergriff eine rohrförmige Öffnung am distalen Ende am distalen Ende ausreichend gekrümmt ist, um die rohrförmige Öffnung auf das Ende des Schubkarrengriffs zu stecken.

Aus der US 2007/024029 A1 ist eine verstellbare Griffbaugruppe bekannt, die für eine Vorrichtung konfiguriert ist, die ein Kind stützt und trägt und die entlang einer Oberfläche bewegt werden kann. Die Griffanordnung ist mit einer Griffverlängerung gekoppelt, die sich von einem Teil der Vorrichtung aus erstreckt und ein Ende mit einer Verlängerungsachse aufweist. Die Griffbaugruppe hat einen Stiel, der so konfiguriert ist, dass er an dem Ende der Griffverlängerung befestigt werden kann. Die Griffbaugruppe hat auch einen Griffkörper, der mit dem Stiel gekoppelt ist. Der Griffkörper ist relativ zur Griffverlängerung sowohl in Längsrichtung entlang der Verlängerungsachse als auch in Rotation um die Verlängerungsachse unabhängig beweglich. Ein Aktuator ist an der Griffbaugruppe vorgesehen und kann zwischen einer Verriegelungsposition und einer Freigabeposition betätigt werden. In der Verriegelungsstellung befindet sich der Griffkörper in fixierter Position relativ zur Griffverlängerung. In der Freigabestellung kann der Griffkörper sich sowohl entlang als auch um die Verlängerungsachse zwischen mehreren wählbaren Längs- und Rotationsstellungen bewegen. In einem Beispiel ist die Vorrichtung ein Kinderwagen, der zwei solcher Griffkörper verwendet.

Aufgrund der erhöhten einwirkenden Kräfte, die durch die aufragenden Griffteile entstehen, kann es bei den im Stand der Technik genannten Schiebegriffeinheiten insbesondere bei unsachgemäßem Gebrauch zu Schädigungen kommen. Wünschenswert wäre es daher, eine Schiebegriffeinheit für Transportwagen dahingehend weiterzubilden, dass die durch den Nutzer verursachte Kraft- und Momenteneinleitung der aufragenden Griffteile in die Schiebegriffeinheit einerseits optimiert wird und andererseits der Benutzer seine Handhaltung variieren kann und sowohl eine vertikale als auch horizontale Griffmöglichkeit vorgesehen ist.

Es ist die Aufgabe der vorliegenden Erfindung, eine Schiebegriffeinheit für einen Transportwagen der eingangs genannten Art in vorteilhafter Weise weiterzubilden, insbesondere dahingehend, dass die Krafteinleitung in die Schiebegriffeinheit sowie die vertikale Griffmöglichkeit einer Schiebegriffeinheit verbessert werden kann.

Diese Aufgabe wird erfindungsgemäß gelöst durch eine Schiebegriffeinheit mit den Merkmalen des Anspruchs 1. Danach ist vorgesehen, dass eine Schiebegriffeinheit, insbesondere eine mehrteilige Schiebegriffeinheit, mit wenigstens einem ersten und mit wenigstens einem zweiten Endstück versehen ist, wobei jedes Endstück wenigstens eine freistehende, aufragende Greifeinheit, wenigstens ein Horizontalansatzstück, wenigstens einen bogenförmigen Eckknoten sowie wenigstens eine Befestigungseinrichtung zum Befestigen des jeweiligen Endstücks an einen von Hand geführten Transportwagen aufweist, wobei die freistehende, aufragende Greifeinheit wenigstens aus einer Greifeinheitaufnahme und wenigstens aus einem Greifeinheiteinsatz besteht, wobei das Horizontalansatzstück und die Greifeinheitaufnahme an dem bogenförmigen Eckknoten derart angeformt sind, dass mittels des bogenförmigen Eckknotens ein stufenfreier Übergang zwischen dem Horizontalansatzstück und der Greifeinheit ausgebildet ist.

Die Erfindung basiert auf dem Grundgedanken, dass durch das Vorsehen des bogenförmigen Eckknotens, an welchem die Greifeinheit, das Horizontalansatzstück und die Befestigungseinrichtung zusammenlaufen die Materialbeanspruchung in diesem Bereich der Schiebegriffeinheit in Folge einer Kraft- und Momenteneinleitung gesenkt werden kann. Durch diese Formgebung des Eckknotens ohne abrupte Übergänge wird ein vorteilhafter Kraft- und Momenteinfluss ohne abrupte Belastungsspitzen erreicht. Besonders positiv wirkt sich diesbezüglich der stufenfreie Übergang zwischen dem Horizontalansatzstück und der Greifeinheit (z.B. verminderte Kerbwirkung) aus, da somit Spannungskonzentrationen in diesem ohnehin stark beanspruchten Eckbereich der Schiebegriffeinheit minimiert werden können. Zudem bewirkt die kontinuierliche Richtungsänderung mittels der Formgebung des bogenförmigen Eckknotens eine weitere Minimierung der mechanischen Beanspruchung. Die Minimierung der mechanischen Beanspruchung wirkt sich ebenfalls positiv auf die Beanspruchung der Befestigungseinrichtung aus, da diese in Bezug auf die minimierte mechanische Beanspruchung ebenfalls in ihrer Formgebung und ihrem strukturellen Aufbau verbessert werden kann. Zudem kann die im montierten und betriebsfertigen Zustand der Schiebegriffeinheit freistehende, aufragende Greifeinheit, die eine vertikale Griffmöglichkeit für den Benutzer des Transportwagens bereitstellt, einfacher aufgebaut sein und bedarfsgerecht sowie auch entsprechend ergonomischen Bedürfnissen angepasst werden. Dies wird dadurch erreicht, dass die Greifeinheit wenigstens zweiteilig ausgeführt ist. Darüber hinaus kann der Greifeinheiteinsatz, beispielsweise bei Beschädigung, unproblematisch ausgetauscht und ersetzt werden. Dies kann dann auch erfolgen, ohne dass die Schiebegriffeinheit bzw. die Endstücke vollständig demontiert werden müssen.

Im Übrigen kann vorgesehen sein, dass der bogenförmige Eckknoten und/oder das Horizontalansatzstück und/oder die Greifeinheit wenigstens abschnittsweise dieselbe Querschnittsgeometrie aufweisen. Durch dieselbe Querschnittsgeometrie (verringerte Kerbwirkung) kann die mechanische Belastung dieser Strukturelemente weiter gesenkt werden. Zudem erlaubt derselbe Querschnitt eine Vereinfachung der Verbindung dieser Bauteile sowie deren Fertigung.

Die Befestigungseinrichtung ist an einem gekrümmten Abschnitt des bogenförmigen Eckknotens, insbesondere einstückig, angeformt.

Dies ist insbesondere aus strukturmechanischen Gesichtspunkten sinnvoll und vorteilhaft, weil sich dadurch die von dem freistehenden, aufragenden Greifelement eingeleiteten Kräfte Momente minimieren lassen. Somit kann die Befestigungseinrichtung hinsichtlich ihrer Werkstoffauswahl und ihrer Geometrie optimiert werden.

Zudem ist denkbar, dass das Horizontalansatzstück im montierten und betriebsfertigen Zustand der Schiebegriffeinheit horizontal ausgerichtet ist, sodass das Horizontalansatzstück, der bogenförmige Eckknoten und die freistehende, aufragende Greifeinheit eine im Wesentlichen L-förmige Anordnung ausbilden. Aufgrund der horizontalen Ausrichtung des Horizontalansatzstücks ist eine weitere horizontal angeordnete Greifeinheit bereitstellbar. Dadurch wird die Variabilität der Nutzung der Schiebegriffeinheit für den Benutzer erhöht und somit eine bessere Anpassung an dessen ergonomische Bedürfnisse erzielt.

Außerdem ist möglich, dass das Horizontalansatzstück wenigstens aus einer Horizontalansatzstückaufnahme und wenigstens aus einem Horizontalansatzstückeinsatz besteht, wobei die Greifeinheitaufnahme und die Horizontalansatzstückaufnahme an dem bogenförmigen Eckknoten, insbesondere einstückig, angeformt sind. Wie bereits zuvor erläutert, kann das Horizontalansatzstück ebenfalls eine Greifeinheit aufweisen, die im montierten und betriebsfertigen Zustand der Schiebegriffeinheit horizontal ausgerichtet ist. Aufgrund der Zweiteiligkeit des Horizontalansatzstücks kann die Variabilität in der Formgebung sowie in der Herstellung des Horizontalansatzstücks in vorteilhafter Weise verbessert werden. Folglich kann so den ergonomischen Bedürfnissen eines Nutzers besser entsprochen werden. Zusätzlich werden durch die einstückige Anformung der Greifeinheitaufnahme und der Horizontalansatzstückaufnahme an den Eckknoten die strukturmechanischen Eigenschaften der Schiebegriffeinheit sowie die Kraft- und Momenteneinleitung durch einen Nutzer von der freistehenden, aufragenden Greifeinheit in die Schiebegriffeinheit verbessert.

Des Weiteren kann vorgesehen sein, dass der Greifeinheiteinsatz in die Greifeinheitaufnahme und der Horizontalansatzstückeinsatz in die Horizontalansatzstückaufnahme einsetzbar und/oder einschiebbar und/oder einklemmbar und/oder verrastbar und/oder klipsbar und/oder verschraubbar und/oder vernietbar und/oder klebbar sind, wobei an dem Greifeinheiteinsatz und/oder an dem Horizontalansatzstückeinsatz wenigstens eine Objekthalterung, insbesondere einstückig, angeformt ist. Zum einen wird durch die zuvor beschriebenen Verbindungsarten eine variable, sichere, zuverlässige und widerstandsfähige Verbindung des jeweils zweiteilig aufgebauten Horizontalansatzstücks bzw. der Greifeinheit gewährleistet. Zum anderen ermöglicht die große Variabilität dieser Verbindungsarten je nach Formgebung des Horizontalansatzstücks bzw. der Greifeinheit die spezifisch dafür am besten geeignete Verbindungsart zu auszuwählen.

Ebenfalls ist vorstellbar, dass die Objekthalterung als eine Halterung für wenigstens einen Getränkebecher und/oder einen Handscanner und/oder eine Lupe und/oder Griffkappe ausgebildet ist. Insbesondere die für die Nutzerfreundlichkeit im Zusammenhang stehenden Merkmale der Objekthalterung wie z.B. eine Handyhalterung verbessern für einen Nutzer die Nutzung eines mit dieser Objekthalterung ausgerüsteten Transportwagens deutlich. Zusätzlich besteht die Möglichkeit an beiden aufragenden, freistehenden Greifeinheiten eine Objekthalterung vorzusehen, wodurch die Nutzerfreundlichkeit der Schiebegriffeinheit nochmals in vorteilhafter Weise verbessert werden kann. Denkbar ist weiter, dass die Objekthalterung als eine Halterung für wenigstens ein Handy und/oder ein Tabletcomputer und/oder ein eBook und/oder einen Einkaufszettel und/oder als Haken und/oder Umlaufgriff ausgebildet ist.

Darüber hinaus ist denkbar, dass an dem Greifeinheiteinsatz eine weitere freistehende Greifeinheit, insbesondere einstückig, angeformt ist, so dass die Greifeinheiten, der bogenförmige Eckknoten und das Horizontalansatzstück eine im Wesentlichen C-förmige Anordnung ausbilden. Mittels der weiteren freistehenden Greifeinheit kann eine zusätzliche Greifmöglichkeit vorteilhaft an der Schiebegriffeinheit bereitgestellt werden. Dies ermöglicht beispielsweise recht groß gewachsenen Nutzern eine spürbare Erleichterung in der Nutzung des Transportwagens, da sie zum Schieben des mit der weiteren freistehenden Greifeinheit ausgerüsteten Transportwagens eine aufrechtere und schonendere Haltung einnehmen können. Die einstückige Anformung der weiteren Greifeinheit verbessert insbesondere die Steifigkeit der Baueinheit bestehend aus freistehender, aufragender Greifeinheit und der weiteren daran befestigten Greifeinheit.

Weiterhin ist möglich, dass das erste und zweite Endstück mittels einer Querstrebe verbunden sind, die an dem Greifeinheiteinsatz und/oder an dem Horizontalansatzstückeinsatz angeformt ist. Das Anformen der Querstrebe an dem Greifeinheiteinsatz und/oder an dem Horizontalansatzstückeinsatz erhöht die Steifigkeit und die Stabilität der gesamten Schiebegriffeinheit. Die Querstrebe kann auch insbesondere an einem jeweiligen Ansatz des Greifeinheiteinsatzes und/oder des Horizontalansatzstückeinsatzes angeformt sein. Denkbar ist insbesondere, dass der jeweilige Ansatz, der in die Querstrebe einsetzbar ist, formschlüssig in die Querstrebe eingreift. Außerdem kann der Ansatz eine Verdrehsicherung ausbilden. Hierdurch wird die Stabilität der Schiebegriffeinheit erhöht und gleichzeitig deren Montage erleichtert. Zudem bietet die Querstrebe konstruktiv relativ einfach die Möglichkeit weitere für die Nutzung der Schiebegriffeinheit bzw. des Transportwagens vorteilhafte Funktionen wie z.B. ein Münzpfandsystem mit der Querstrebe zu kombinieren.

Diesbezüglich kann vorgesehen sein, dass die Querstrebe ein Mittelteil umfasst, das ein Münzpfandsystem und/oder eine Anzeigeeinrichtung aufweist. Das Münzpfandsystem kann zusätzlich oder alternativ dazu eingerichtet sein, die Pfandfunktion des Transportwagens auch auf Basis von Geldscheinen bereitzustellen. Aufgrund dieser Ausgestaltung in dem Mittelteil der Querstrebe kann die Schiebegriffeinheit und der Transportwagen für den Nutzer ergonomisch ausgebildet werden und in einfacher Art und Weise insbesondere gegen Diebstahl gesichert werden. Zusätzlich bietet die Anzeigeeinrichtung einem Besitzer des Transportwagens die Möglichkeit in dem Anzeigefeld z.B. wichtige Nutzungsinformationen oder Werbebotschaften für den Nutzer vorzusehen. Ferner kann vorgesehen sein, dass die Anzeigeeinrichtung am Transportwagen angebracht ist.

Ferner ist vorstellbar, dass das Mittelteil eine ausgesparte Ablagefläche sowie eine ausgesparte Ablageausbuchtung zum Ablegen von Kleinteilen wie wenigstens einem Zettel und/oder einem Schlüssel und/oder einem Handy und/oder einem Tabletcomputer und/oder einem eBook aufweist. Die Anordnung der Ablagefläche und der Ablageausbuchtung am Mittelteil der Querstrebe ist besonders deshalb von Vorteil, da so Wertsachen wie Handys oder Schlüssel einerseits nah am Körper des Nutzers geführt werden können. Andererseits befinden sich die Wertsachen des Nutzers durch die mittige Ablagemöglichkeiten stets im unmittelbaren Blickfeld des Nutzers, wodurch dessen Sicherheitsgefühl während der Nutzung des Transportwagens gesteigert wird. Die Ablageausbuchtung und/oder die Ablagefläche kann rechteckig oder trapezförmig mit kreisrunden Ecken ausgebildet sein. Ferner kann die Ablageausbuchtung mit ihrer äußeren Kontur mit dem Münzpfandsystem fluchten. Zudem kann eine Höhe der Ablageausbuchtung ca. 20% bis ca. 60%, insbesondere ca. 30% bis ca. 50%, einer Höhe der Ablagefläche einnehmen.

Auch denkbar ist, dass das Mittelteil eine Objekthalterung in Form von wenigstens drei Klemmlippen aus Kunststoff, insbesondere aus Gummi, aufweist, zum Verklemmen wenigstens eines plattenförmigen Objekts, insbesondere ein Tabletcomputer und/oder ein eBook, an die Ablageausbuchtung und/oder die Ablagefläche. Für Nutzer des Transportwagens kann das Mitführen eines Handys, eines eBooks oder eines Tabletcomputers eine große Erleichterung im Zusammenhang mit der Nutzung des Transportwagens darstellen, da beispielsweise darin die aktuelle Einkaufsliste für den anstehenden Einkauf hinterlegt sein kann. Um ein sicheres Mitführen des elektronischen Geräts zu gewährleisten, weist das Mittelteil zusätzlich eine Objekthalterung auf, die insbesondere bei Stößen oder ruckartigen Bewegungen des Transportwagens aus einem elastischen, dämpfenden Werkstoff wie Gummi ausgebildet sein sollte. Dazu kann es zusätzlich vorgesehen sein, dass die Klemmlippen in die Ablageausbuchtung und/oder die Ablagefläche hineinragen. Zudem kann das Mittelteil eine Objekthalterung in Form von wenigstens einer Zettelklammer zum Verklemmen wenigstens eines Notizzettels an die Ablageausbuchtung und/oder die Ablagefläche aufweisen.

Überdies ist möglich, dass die Ablageausbuchtung und/oder die Ablagefläche im montierten und betriebsfertigen Zustand der Schiebegriffeinheit einen Winkel zwischen ca. 0° und ca. 85°, insbesondere zwischen ca. 0° und ca. 75°, zu einer horizontalen Bezugsebene aufweisen. Somit lässt sich die Neigung der Ablageausbuchtung und der Ablagefläche in weiten Grenzen einstellen, was sich insbesondere vorteilhaft auf die Gestaltungsmöglichkeiten der gesamten Schiebegriffeinheit auswirkt.

Weiter kann vorgesehen sein, dass die Schiebegriffeinheit aus wenigstens einem spritzgießbaren Kunststoff hergestellt ist. Aufgrund der Herstellung aus spritzgießbarem Kunststoff kann eine kostengünstige Herstellung der Schiebegriffeinheit erreicht werden. Zusätzlich kann das Gewicht der Schiebegriffeinheit bzw. des Transportwagens durch den Einsatz eines oder mehrerer Kunststoffe (als Verbundwerkstoff) gesenkt werden. Denkbar ist beispielsweise der Einsatz von verstärktem oder unverstärktem Polypropylen oder einem faserverstärktem Kunststoff. Im Übrigen ist auch der Einsatz von verstärktem oder unverstärktem Polyamid denkbar. Grundsätzlich ist jede Art von Kunststoff, insbesondere schlagzäher Kunststoff, für diese Anwendung geeignet.

Zudem vorstellbar ist, dass die Schiebegriffeinheit wenigstens teilweise mittels eines 2-Komponenten-Spritzgussverfahrens hergestellt ist und wenigstens zweifarbig ausgebildet ist. So können z.B. die Greifeinheitaufnahme und der Greifeinheiteinsatz zumindest teilweise aus unterschiedlichen Materialien ausgebildet sein. Hierdurch wird es beispielsweise möglich, unterschiedliche Farben der Greifeinheitaufnahme bzw. des Endstücks auf der einen und dem Greifeinheiteinsatz auf der anderen Seite zu ermöglichen. Hierdurch wird es auch möglich, Antistatikmaßnahmen zu erreichen, so kann beispielsweise der Greifeinheiteinsatz aus antistatischen Materialien ausgeführt werden oder es kann eine Isolierschicht zwischen Greifeinheitaufnahme und Greifeinheiteinsatz oder die Greifeinheitaufnahme vorgesehen sein. Des Weiteren ist es auch möglich, dass der Greifeinheiteinsatz teilweise zur Verbesserung der Grip-Eigenschaften mit Gummieinsätzen oder Silikoneinsätzen versehen ist

Im Übrigen betrifft die vorliegende Erfindung einen von Hand beweglichen Transportwagen mit wenigstens einer Schiebegriffeinheit wie vorstehend beschrieben. Bei dem Transportwagen kann es sich beispielsweise um einen Einkaufswagen oder einen Transportwagen für Baumärkte handeln. Ebenso kann der Transportwagen als Gepäcktransportwagen für Flughäfen oder Bahnhöfe ausgebildet sein.

Weitere Einzelheiten und Vorteile der Erfindung sollen nun anhand der in den Zeichnungen dargestellten Ausführungsbeispielen näher erläutert werden.

Es zeigen:
- Fig. 1a: eine perspektivische Darstellung eines ersten Ausführungsbeispiels einer erfindungsgemäßen Schiebegriffeinheit;
- Fig. 1b: eine weitere perspektivische Darstellung des ersten Ausführungsbeispiels der Schiebegriffeinheit;
- Fig. 2: eine Seitenansicht des ersten Ausführungsbeispiels der Schiebegriffeinheit gemäß Fig. 1a;
- Fig. 3: eine Vorderansicht des ersten Ausführungsbeispiels der Schiebegriffeinheit gemäß Fig. 1a;
- Fig. 4: eine Draufsicht des ersten Ausführungsbeispiels der Schiebegriffeinheit gemäß Fig. 1a;
- Fig. 5: eine Rückansicht des ersten Ausführungsbeispiels der Schiebegriffeinheit gemäß Fig. 1a;
- Fig. 6: eine Unteransicht des ersten Ausführungsbeispiels der Schiebegriffeinheit gemäß Fig. 1a;
- Fig. 7: eine perspektivische Darstellung des ersten Ausführungsbeispiels der Schiebegriffeinheit gemäß Fig. 1a sowie ein Ausführungsbeispiel eines erfindungsgemäßen Transportwagens;
- Fig. 8: eine Seitenansicht des ersten Ausführungsbeispiels der Schiebegriffeinheit gemäß Fig. 1a sowie des Ausführungsbeispiels des Transportwagens gemäß Fig. 7;
- Fig. 9: eine Vorderansicht des ersten Ausführungsbeispiels der Schiebegriffeinheit gemäß Fig. 1a sowie des Ausführungsbeispiels des Transportwagens gemäß Fig. 7;
- Fig. 10: eine Draufsicht des ersten Ausführungsbeispiels der Schiebegriffeinheit gemäß Fig. 1a sowie des Ausführungsbeispiels des Transportwagens gemäß Fig. 7;
- Fig. 11: eine Rückansicht des ersten Ausführungsbeispiels der Schiebegriffeinheit gemäß Fig. 1a sowie des Ausführungsbeispiels des Transportwagens gemäß Fig. 7;
- Fig. 12: eine Unteransicht des ersten Ausführungsbeispiels der Schiebegriffeinheit gemäß Fig. 1a sowie des Ausführungsbeispiels des Transportwagens gemäß Fig. 7;
- Fig. 13: eine weitere Seitenansicht des ersten Ausführungsbeispiels der Schiebegriffeinheit gemäß Fig. 1a sowie des Ausführungsbeispiels des Transportwagens gemäß Fig. 7;
- Fig. 14: eine perspektivische Ansicht eines zweiten Ausführungsbeispiels einer erfindungsgemäßen Schiebegriffeinheit;
- Fig. 15: eine perspektivische Rückansicht eines dritten Ausführungsbeispiels einer erfindungsgemäßen Schiebegriffeinheit;
- Fig. 16: eine perspektivische Ansicht eines vierten Ausführungsbeispiels einer erfindungsgemäßen Schiebegriffeinheit;
- Fig. 17: eine perspektivische Ansicht eines fünften Ausführungsbeispiels einer erfindungsgemäßen Schiebegriffeinheit;
- Fig. 18: eine perspektivische Darstellung eines sechsten Ausführungsbeispiels einer erfindungsgemäßen Schiebegriffeinheit;
- Fig. 19: eine perspektivische Darstellung eines siebten Ausführungsbeispiels einer erfindungsgemäßen Schiebegriffeinheit; und
- Fig. 20: eine perspektivische Darstellung eines achten Ausführungsbeispiels einer erfindungsgemäßen Schiebegriffeinheit.

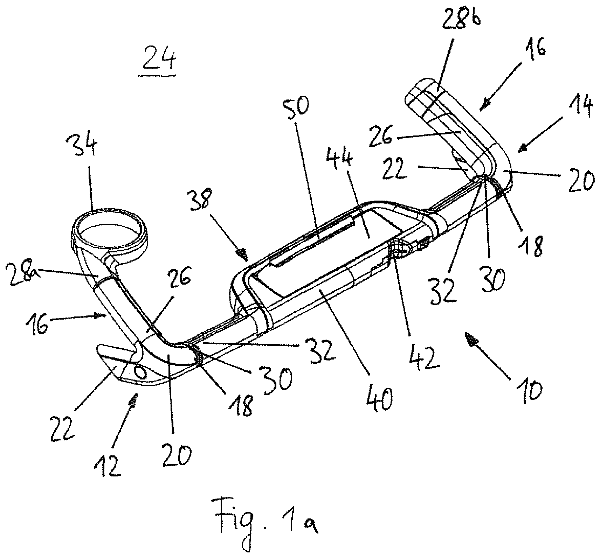

Fig. 1a zeigt in perspektivischer Darstellung ein erstes Ausführungsbeispiel einer erfindungsgemäßen Schiebegriffeinheit 10.

Die Schiebegriffeinheit 10 ist als mehrteilige Schiebegriffeinheit 10 ausgebildet.

Die Schiebegriffeinheit 10 weist ein erstes Endstück 12 und ein zweites Endstück 14 auf.

Jedes Endstück 12, 14 umfasst ferner eine freistehende, aufragende Greifeinheit 16, ein Horizontalansatzstück 18, einen bogenförmigen Eckknoten 20 sowie eine Befestigungseinrichtung 22 zum Befestigen des jeweiligen Endstücks 12, 14 an einen von Hand geführten Transportwagen 24.

Die freistehende, aufragende Greifeinheit 16 besteht aus einer Greifeinheitaufnahme 26 und aus einem Greifeinheiteinsatz 28a, 28b.

Der Greifeinheiteinsatz 28a, 28b ragt in axialer Richtung der Längsachse der Greifeinheitaufnahme 26 über diese hinaus.

Die Greifeinheitaufnahme 26 weist eine eingesenkte Aufnahmeaussparung auf, die in der dem bogenförmigen Eckknoten 20 abgewandten Stirnseite der Greifeinheitaufnahme 26 eingebracht ist.

Der Greifeinheiteinsatz 28a, 28b weist einen zur Aufnahmeaussparung der Greifeinheitaufnahme 26 korrespondierenden Einsetzabschnitt auf.

Demzufolge ist der Greifeinheiteinsatz 28a, 28b sowohl kraftschlüssig als auch formschlüssig mit der Greifeinheitaufnahme 26 verbindbar.

An dem Greifeinheiteinsatz 28a ist zudem eine Objekthalterung 34 einstückig angeformt.

Die Objekthalterung 34 besteht aus einem kreisringförmigen Strukturelement und einem daran einstückig angeformten bogenförmigen Strukturelement, das den Greifeinheiteinsatz 28a mit der äußeren Oberfläche des kreisringförmigen Strukturelements verbindet.

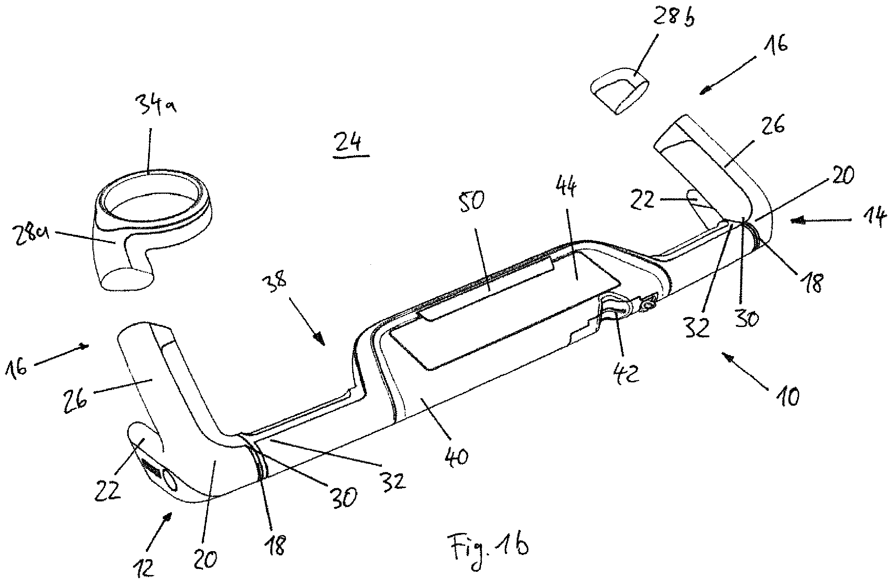

Die Objekthalterung 34 ist als eine Halterung für einen Getränkebecher oder für eine Lupe (siehe Fig. 1b, Objekthalterung 34a mit klappbarem Deckel zum Schutz der Lupe) ausgebildet.

Ferner ist es denkbar, dass die Objekthalterung als Halterung für einen Handscanner, ein Handy, ein Tabletcomputer, ein eBook oder einen Einkaufszettel ausgebildet ist.

Zudem ist es vorstellbar, dass die Objekthalterung als Haken, Umlaufgriff oder Griffkappe ausgebildet ist.

An dem Greifeinheiteinsatz 28b ist wiederum eine Griffkappe einstückig angeformt, welche dieselbe Querschnittsgeometrie wie der Greifeinheiteinsatz 28b und die Greifeinheitaufnahme 26 aufweist und ein Ende mit abgerundeten Bereichen aufweist.

Die Greifeinheitaufnahme 26 und die Horizontalansatzstückaufnahme 30 sind an dem bogenförmigen Eckknoten 20 einstückig angeformt.

Die beiden Endstücke 12, 14 der Schiebegriffeinheit 10 sind strukturell identisch aufgebaut und spiegelbildlich zueinander angeordnet.

Die Befestigungseinrichtung 22 ist an einem gekrümmten Abschnitt des bogenförmigen Eckknotens 20 einstückig angeformt.

Die Befestigungseinrichtung 22 ist als rohrförmiger Körper ausgebildet und mündet mittels zwei bogenförmigen Abschnitten zumindest in den gekrümmten Abschnitt des bogenförmigen Eckknotens 20.

Die Befestigungseinrichtung 22 kann mittels der zwei bogenförmigen Abschnitte zusätzlich in die Greifeinheitaufnahme 26 und in die Horizontalansatzstückaufnahme 30 münden.

An dem Ende der Befestigungseinrichtung 22, das an der Schiebegriffeinheit 10 einstückig angeformt ist, sind zwei sich horizontal erstreckende Bohrungen oder Gewindebohrungen zur Aufnahme eines Befestigungsstifts, Befestigungsbolzens oder einer Befestigungsschraube des Transportwagens 24 eingebracht.

Das Horizontalansatzstück 18 und die Greifeinheitaufnahme 26 sind an dem bogenförmigen Eckknoten 20 derart angeformt, dass mittels des bogenförmigen Eckknotens 20 ein stufenfreier Übergang zwischen dem Horizontalansatzstück 18 und der Greifeinheit 16 ausgebildet ist.

Der stufenfreie Übergang bedeutet in diesem Zusammenhang, dass im Wesentlichen ein Übergang ohne Querschnittsänderung bzw. im Wesentlichen ein nahtloser Übergang zwischen dem Horizontalansatzstück 18, dem Eckknoten 20 und der freistehenden, aufragenden Greifeinheit 16 ausgebildet ist.

Demzufolge weisen der bogenförmige Eckknoten 20, das Horizontalansatzstück 18 und die Greifeinheit 16 abschnittsweise dieselbe Querschnittsgeometrie auf.

Das Horizontalansatzstück 18 besteht aus einer Horizontalansatzstückaufnahme 30 und aus einem Horizontalansatzstückeinsatz 32. Die Horizontalansatzstückaufnahme 30 kann derart beschaffen sein, dass sie den Horizontalansatzstückeinsatz 32 aufnimmt bzw. dass dieser in die Horizontalansatzstückaufnahme 30 hineinsteckbar bzw. hingesteckt ist. Dies ist auch andersherum denkbar, d.h. in den Horizontalansatzstückeinsatz 32 wird bzw. ist die Horizontalansatzstückaufnahme 30 hineingesteckt.

Der Horizontalansatzstückeinsatz 32 ragt in axialer Richtung der Längsachse der Horizontalansatzstückaufnahme 30 über diese hinaus.

Die Horizontalansatzstückaufnahme 30 weist eine eingesenkte Aufnahmeaussparung auf, die in der dem bogenförmigen Eckknoten 20 abgewandten Stirnseite der Horizontalansatzstückaufnahme 30 eingebracht ist.

Der Horizontalansatzstückeinsatz 32 weist einen zur Aufnahmeaussparung der Horizontalansatzstückaufnahme 30 korrespondierenden Einsetzabschnitt auf.

Somit ist der Horizontalansatzstückeinsatz 32 sowohl kraftschlüssig als auch formschlüssig mit der Horizontalansatzstückaufnahme 30 verbindbar.

Das Horizontalansatzstück 18 ist im montierten und betriebsfertigen Zustand der Schiebegriffeinheit 10 horizontal ausgerichtet ist.

Das Horizontalansatzstück 18, der bogenförmige Eckknoten 20 und die freistehende, aufragende Greifeinheit 16 bilden eine im Wesentlichen L-förmige Anordnung aus.

An den Horizontalansatzstückeinsatz 32 ist gemäß Fig. 1a eine weitere ebenfalls horizontal ausgerichtete Greifeinheit bündig, einstückig angeformt.

Die Befestigungseinrichtung 22 und die freistehende, aufragende Greifeinheit 16 bilden zudem im montierten und betriebsfertigen Zustand der Schiebegriffeinheit 10 eine V-förmige Anordnung bzw. eine Anordnung ein einem spitzen Winkel zueinander aus.

Ferner sind gemäß Fig. 1a das erste und zweite Endstück 12, 14 mittels einer Querstrebe 38 verbunden.

Die Querstrebe 38 ist an dem jeweiligen Horizontalansatzstückeinsatz 32 angeformt.

Ferner umfasst die Querstrebe 38 ein Mittelteil 40, das ein Münzpfandsystem 42 und eine Anzeigeeinrichtung 44 aufweist. Es muss aber nicht zwingend ein Münzpfandsystem 42 und eine Anzeigeeinrichtung 44 vorgesehen sein, denkbar ist auch, dass das Mittelteil nur eine Griffstange hat.

An dem Horizontalansatzstückeinsatz 32 ist gemäß Fig. 1a die horizontal ausgerichtete Greifeinheit einstückig angeformt, die sich von der Horizontalansatzstückaufnahme 30 bis zu dem Mittelteil 40 erstreckt.

Das Münzpfandsystem 42 und die Anzeigeeinrichtung 44 können als ein Modul ausgebildet sein, das in das Mittelteil 40 einschiebbar bzw. einsetzbar ist.

Das Mittelteil 40 ist an der Querstrebe 38 mittig zwischen dem ersten und dem zweiten Endstück 12, 14 als Vorsprung angeformt.

An die beiden Enden des Mittelteils 40 sind die jeweiligen horizontal ausgerichteten Greifeinheiten einstückig angeformt.

Die Querstrebe 38 umfasst demzufolge wenigstens teilweise die jeweiligen an das Mittelteil 40 angrenzenden horizontal ausgerichteten Greifeinheiten des Horizontalansatzstückeinsatzes 32.

Das Mittelteil 40 weist im Übrigen eine Objekthalterung 50 in Form von einer Zettelklammer 50 auf.

Die Zettelklammer ist an einem Rahmen des Mittelteils 40 befestigt.

Die Funktion der Schiebegriffeinheit 10 lässt sich nun wie folgt beschreiben:
Zur Durchführung unterschiedlicher Transportaufgaben stehen einem Nutzer in den dafür vorgesehenen Einrichtungen wie beispielsweise Einzelhandelsgeschäften, Baumärken, Flughäfen oder Bahnhöfen die jeweiligen für den Einsatzzweck bestimmten Transportwagen 24 zur Verfügung.

Je nach Nutzungsverhalten des Transportwagens 24 kann sich der Nutzer frei und entsprechend seinen persönlichen Neigungen dazu entscheiden, die Schiebegriffeinheit 10 jeweils an der freistehenden, aufragenden Greifeinheit 16 und/oder an den horizontal ausgerichteten Greifeinheiten zu umgreifen.

Mittels den Objekthalterungen 34, 50 werden dem Nutzer zusätzliche Funktionen der Schiebegriffeinheit 10 bereitgestellt, welche die Nutzung des Transportwagens für den Benutzer angenehmer gestalten.

So bietet ihm beispielsweise die Objekthalterung 34 in Form einer Getränkebecherhalterung die Möglichkeit offene Getränke mitzuführen.

Die Objekthalterung 34 und die Griffkappe sind wie bereits zuvor angesprochen, einstückig an den Greifeinheiteinsätzen 28a bzw. 28b angeformt.

Zusätzlich kann der Greifeinheiteinsatz 28a, 28b in die Greifeinheitaufnahme 26 und der Horizontalansatzstückeinsatz 32 in die Horizontalansatzstückaufnahme 30 eingesetzt oder eingeschoben werden.

Im Übrigen ist es auch durchaus vorstellbar, dass der Greifeinheiteinsatz 28a, 28b in die Greifeinheitaufnahme 26 und der Horizontalansatzstückeinsatz 32 in die Horizontalansatzstückaufnahme 30 einklemmbar, verrastbar, klipsbar, verschraubbar, vernietbar oder klebbar sind.

Mittels der weiteren Objekthalterung 50 beispielsweise in Form einer Zettelklammer kann der Nutzer mitgeführte Einkaufszettel oder Notizzettel in der Ablagefläche einklemmen.

Die Schiebegriffeinheit 10 ist im Übrigen aus einem spritzgießbaren Kunststoff hergestellt.

Ferner ist es vorstellbar, dass die Schiebegriffeinheit 10 teilweise mittels eines 2-Komponenten-Spritzgussverfahrens hergestellt ist und zweifarbig ausgebildet ist.

Fig. 1b zeigt eine weitere perspektivische Darstellung des ersten Ausführungsbeispiels der Schiebegriffeinheit 10.

Das in Fig. 1b dargestellte Ausführungsbeispiel der erfindungsgemäßen Schiebegriffeinheit 10 weist im Wesentlichen dieselben strukturellen und funktionalen Merkmale wie das in Fig. 1a dargestellte Ausführungsbeispiel der Schiebegriffeinheit 10 auf. Lediglich der folgende strukturelle Merkmalsunterschied soll aufgezeigt werden:
Die Objekthalterung 34a ist als eine Halterung für eine Lupe ausgebildet.

Zudem sind die Greifeinheiteinsätze 28a, 28b schematisch in Explosionsdarstellung gezeigt.

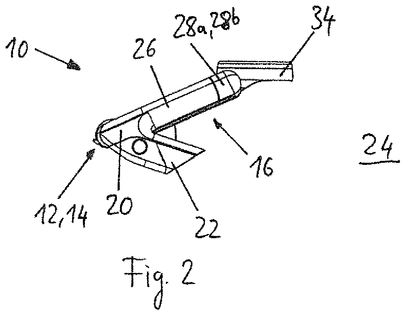

Fig. 2 zeigt eine Seitenansicht des ersten Ausführungsbeispiels der Schiebegriffeinheit 10 gemäß Fig. 1a.

Darin ist insbesondere erkennbar, dass die Objekthalterung 34 im montierten und betriebsfertigen Zustand der Schiebegriffeinheit 10 im Wesentlichen horizontal ausgerichtet ist.

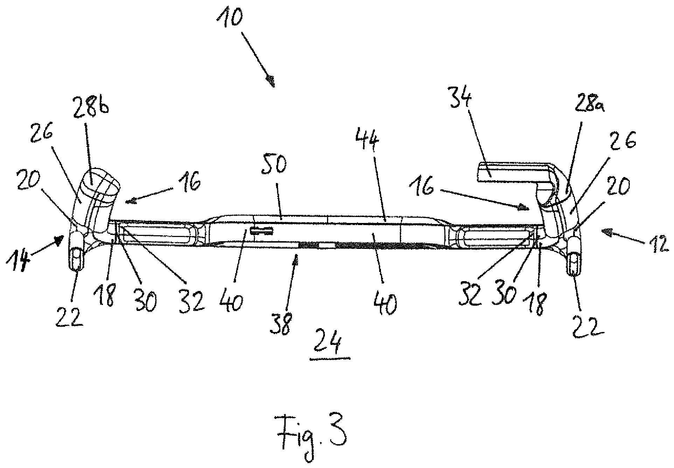

Fig. 3 zeigt eine Vorderansicht des ersten Ausführungsbeispiels der Schiebegriffeinheit 10 gemäß Fig. 1a.

Gemäß Fig. 3 weisen die im montierten und betriebsfertigen Zustand der Schiebegriffeinheit 10 dem Transportwagen 24 zugewandten Schmalseiten der horizontal ausgerichteten Greifeinheiten oberflächlich eingebrachte längliche Aussparungen auf.

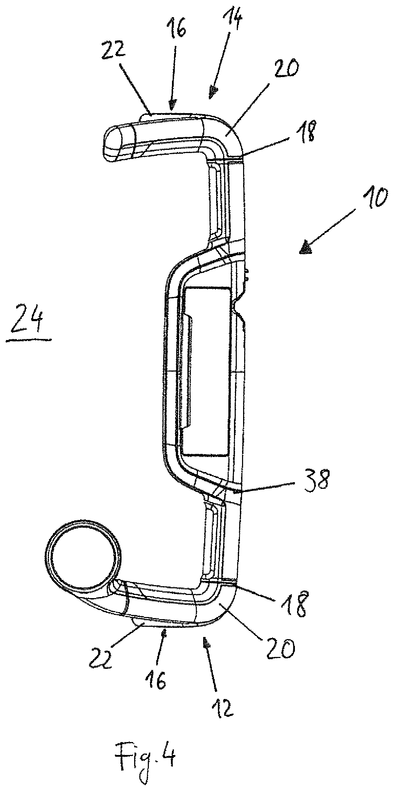

Fig. 4 zeigt eine Draufsicht des ersten Ausführungsbeispiels der Schiebegriffeinheit 10 gemäß Fig. 1a.

Die freistehende, aufragende Greifeinheit 16 schließt jeweils im montierten und betriebsfertigen Zustand der Schiebegriffeinheit 10 mit der Querstrebe 38 einen Winkel im Bereich zwischen ca. 60° bis ca. 75° ein.

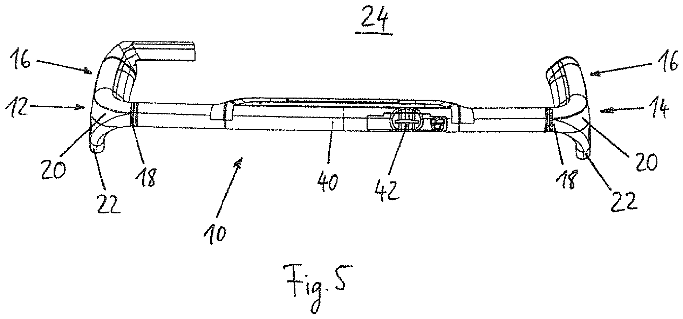

Fig. 5 zeigt eine Rückansicht des ersten Ausführungsbeispiels der Schiebegriffeinheit 10 gemäß Fig. 1a.

Dabei ist die schlitzartige Münzaussparung des Münzpfandsystems 42 im montierten und betriebsfertigen Zustand der Schiebegriffeinheit 10 in der dem Transportwagen 24 abgewandten Schmalseite des Mittelteils 40 eingebracht.

An dieser Schmalseite des Mittelteils 40 ist zusätzlich ein Halterungsbogen für die Diebstahlsicherungskette (nicht in Fig. 5 gezeigt) horizontal neben der schlitzartigen Münzaussparung des Münzpfandsystems 42 angeordnet.

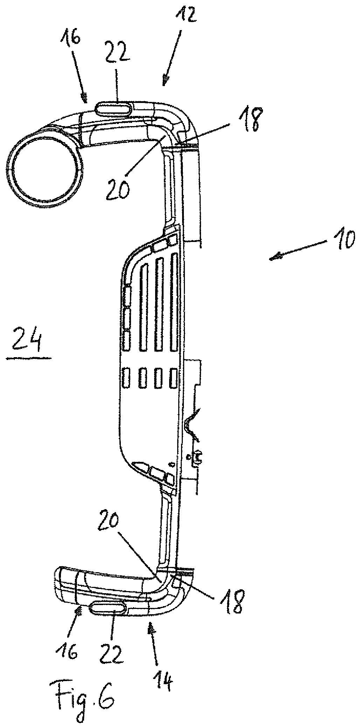

Fig. 6 zeigt eine Unteransicht des ersten Ausführungsbeispiels der Schiebegriffeinheit 10 gemäß Fig. 1a.

Die Befestigungseinrichtung 22 ist mittels eines ersten bogenförmigen Abschnitts und mittels eines zweiten bogenförmigen Abschnitts an dem bogenförmigen Eckknoten 20 einstückig angeformt.

Das Ende des ersten bogenförmigen Abschnitts fluchtet mit der horizontal ausgerichteten Greifeinheit des Horizontalansatzstücks18.

Das Ende des zweiten bogenförmigen Abschnitts fluchtet mit der Greifeinheit 16.

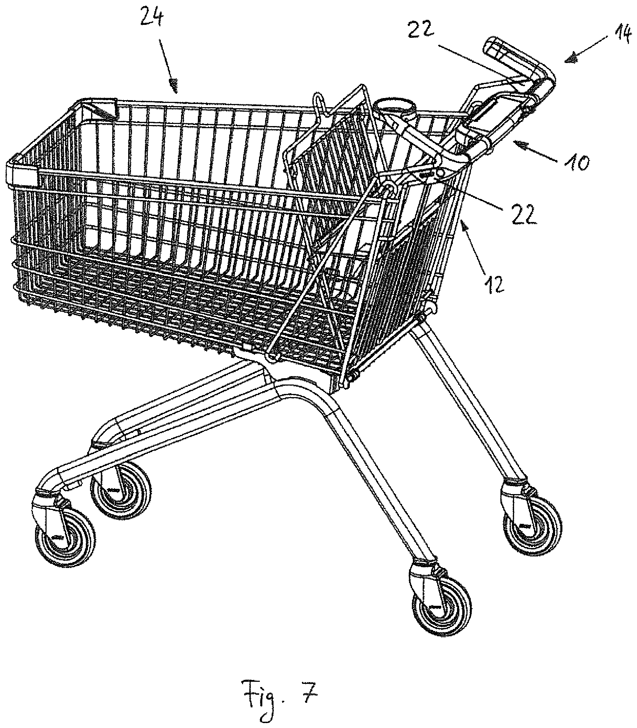

Fig. 7 zeigt eine perspektivische Darstellung des ersten Ausführungsbeispiels der Schiebegriffeinheit 10 gemäß Fig. 1a sowie ein Ausführungsbeispiel eines erfindungsgemäßen Transportwagens 24.

Die Schiebegriffeinheit 10 ist mittels der Befestigungseinrichtungen 22 der Endstücke 12, 14 jeweils an zwei Befestigungsstreben des Transportwagens, gemäß Fig. 7 ein Einkaufswagen, befestigt.

Innerhalb der Befestigungseinrichtung 22 verlaufen die Befestigungsstreben des Transportwagens parallel.

An dem Ende der Befestigungseinrichtung 22, das an der Schiebegriffeinheit 10 einstückig angeformt ist, sind zwei sich horizontal erstreckende Bohrungen oder Gewindebohrungen zur Aufnahme eines Befestigungsstifts oder einer Befestigungsschraube eingebracht.

Die innerhalb der Befestigungseinrichtung 22 parallel sich erstreckenden Befestigungsstreben vereinigen sich zwischen dem Befestigungsstift oder einer Befestigungsschraube und dem Ende der Befestigungseinrichtung 22, das an der Schiebegriffeinheit 10 einstückig angeformt ist, zu einem einstückigen Befestigungsstrebenbogen.

Mittels des Befestigungsstrebenbogens und des Befestigungsstifts oder der Befestigungsschraube sind die Schiebegriffeinheit 10 und der Transportwagen 24 gegenseitig fixierbar.

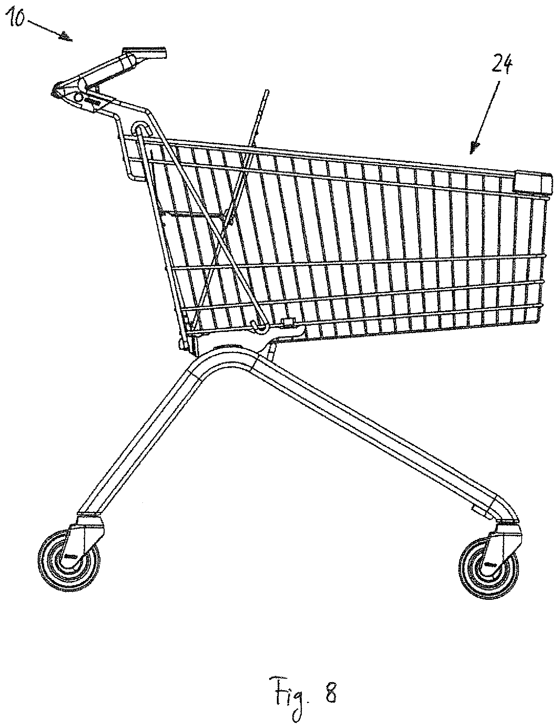

Fig. 8 zeigt eine Seitenansicht des ersten Ausführungsbeispiels der Schiebegriffeinheit 10 gemäß Fig. 1a sowie des Ausführungsbeispiels des Transportwagens 24 gemäß Fig. 7.

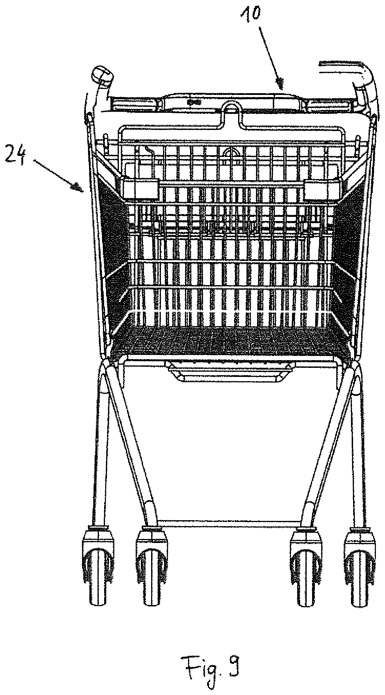

Fig. 9 zeigt ferner eine Vorderansicht des ersten Ausführungsbeispiels der Schiebegriffeinheit 10 gemäß Fig. 1a sowie des Ausführungsbeispiels des Transportwagens 24 gemäß Fig. 7.

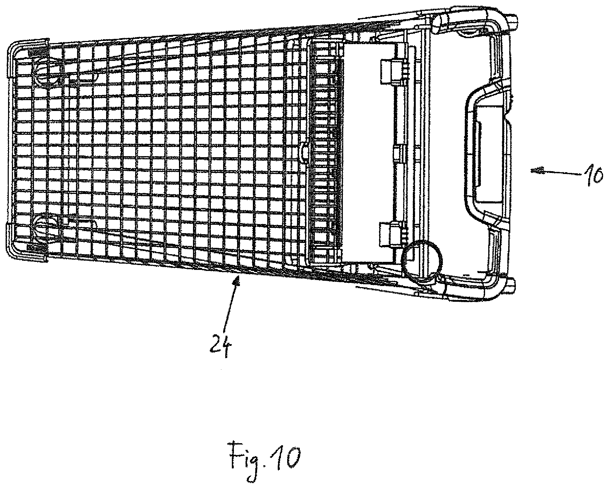

Fig. 10 zeigt weiter eine Draufsicht des ersten Ausführungsbeispiels der Schiebegriffeinheit 10 gemäß Fig. 1a sowie des Ausführungsbeispiels des Transportwagens 24 gemäß Fig. 7.

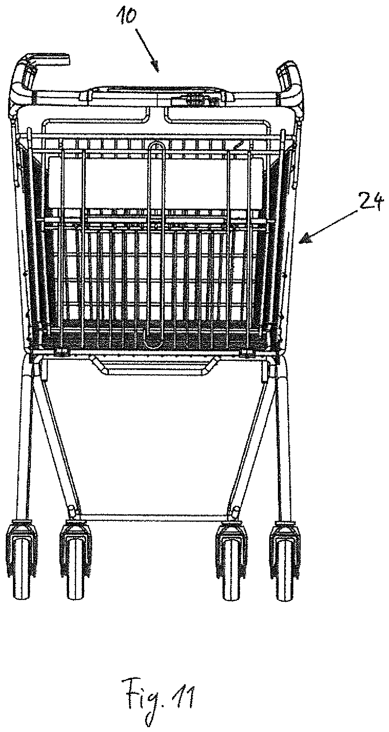

Fig. 11 zeigt zudem eine Rückansicht des ersten Ausführungsbeispiels der Schiebegriffeinheit 10 gemäß Fig. 1a sowie des Ausführungsbeispiels des Transportwagens 24 gemäß Fig. 7.

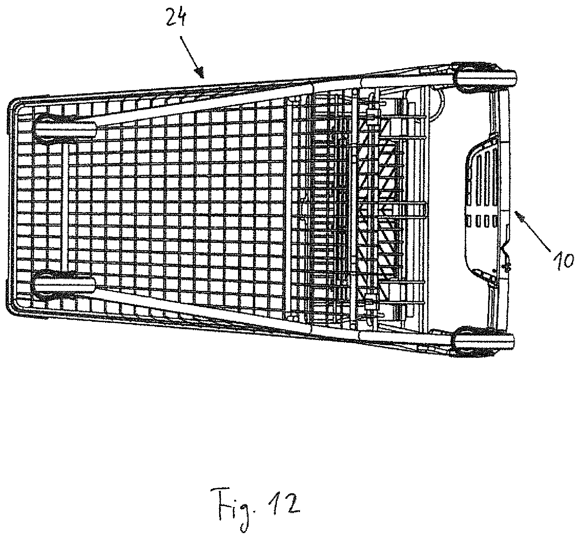

Fig. 12 zeigt darüber hinaus eine Unteransicht des ersten Ausführungsbeispiels der Schiebegriffeinheit 10 gemäß Fig. 1a sowie des Ausführungsbeispiels des Transportwagens 24 gemäß Fig. 7.

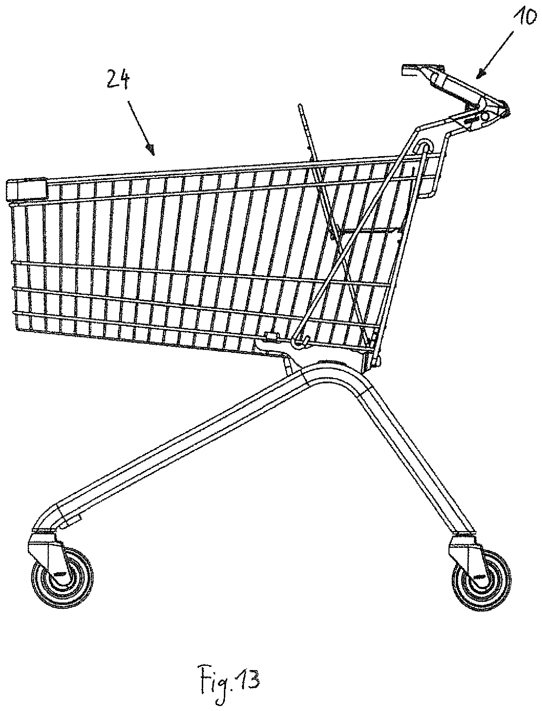

Fig. 13 zeigt im Übrigen eine weitere Seitenansicht des ersten Ausführungsbeispiels der Schiebegriffeinheit 10 gemäß Fig. 1a sowie des Ausführungsbeispiels des Transportwagens 24 gemäß Fig. 7.

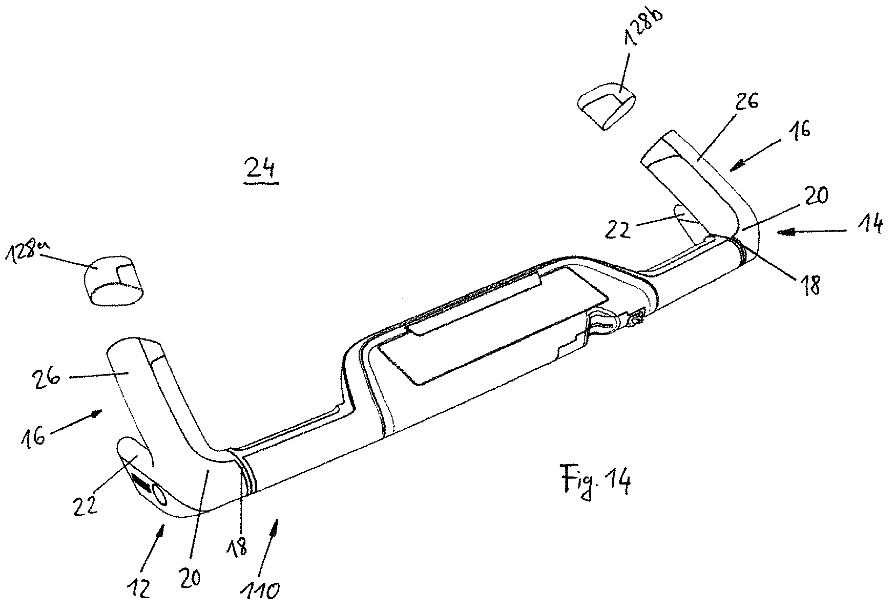

Fig. 14 zeigt eine perspektivische Ansicht eines zweiten Ausführungsbeispiels einer erfindungsgemäßen Schiebegriffeinheit 110.

Das in Fig. 14 dargestellte Ausführungsbeispiel der erfindungsgemäßen Schiebegriffeinheit 110 weist im Wesentlichen dieselben strukturellen und funktionalen Merkmale wie das in den Fig. 1a bis Fig. 6 dargestellte Ausführungsbeispiel der Schiebegriffeinheit 10 auf.

Grundsätzlich gilt für die Vergabe der Bezugszeichen (für alle Ausführungsbeispiele geltend), dass identische oder im Wesentlichen identische Merkmale mit identischen Bezugszeichen oder um den Wert 100 erhöhte Bezugszeichen erhalten.

Lediglich die folgenden strukturellen Merkmalsunterschiede sollen aufgezeigt werden:
An dem Greifeinheiteinsatz 128a sowie an dem Greifeinheiteinsatz 128b ist jeweils eine Griffkappe einstückig angeformt, welche dieselbe Querschnittsgeometrie wie der Greifeinheiteinsatz 128a, 128b und die Greifeinheitaufnahme 26 aufweist und ein Ende mit abgerundeten Bereichen aufweist.

Die Greifeinheiteinsätze 128a, 128b sind gemäß Fig. 14 schematisch in Explosionsdarstellung gezeigt.

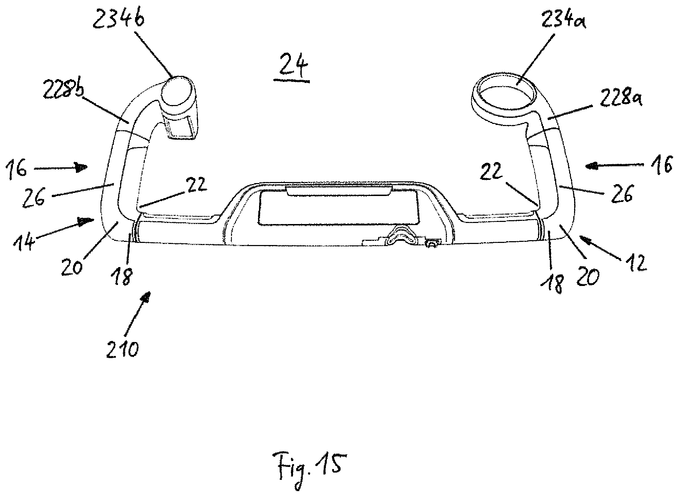

Fig. 15 zeigt eine perspektivische Rückansicht eines dritten Ausführungsbeispiels einer erfindungsgemäßen Schiebegriffeinheit 210.

Das in Fig. 15 dargestellte Ausführungsbeispiel der erfindungsgemäßen Schiebegriffeinheit 210 weist im Wesentlichen dieselben strukturellen und funktionalen Merkmale wie das in den Fig. 1a bis Fig. 6 dargestellte Ausführungsbeispiel der Schiebegriffeinheit 10 auf.

Lediglich die folgenden strukturellen Merkmalsunterschiede sollen aufgezeigt werden:
An dem Greifeinheiteinsatz 228a sowie an dem Greifeinheiteinsatz 228b ist jeweils eine Objekthalterung 234 einstückig angeformt.

Die an den Greifeinheiteinsatz 228a einstückig angeformte Objekthalterung 234a ist als Getränkebecherhalterung oder Lupenhalterung ausgebildet.

Die an den Greifeinheiteinsatz 228b einstückig angeformte Objekthalterung 234b ist als Handscannerhalterung ausgebildet.

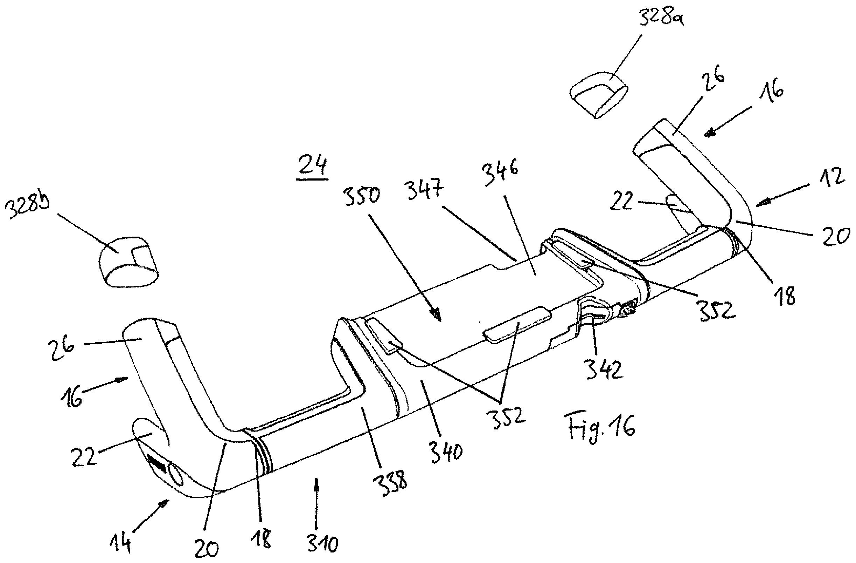

Fig. 16 zeigt eine perspektivische Ansicht eines vierten Ausführungsbeispiels einer erfindungsgemäßen Schiebegriffeinheit 310.

Das in Fig. 16 dargestellte Ausführungsbeispiel der erfindungsgemäßen Schiebegriffeinheit 310 weist im Wesentlichen dieselben strukturellen und funktionalen Merkmale wie das in Fig. 14 dargestellte Ausführungsbeispiel der Schiebegriffeinheit 110 auf.

Lediglich die folgenden strukturellen Merkmalsunterschiede sollen aufgezeigt werden:
Das Mittelteil 340 der Querstrebe 338 weist eine ausgesparte Ablagefläche 346 zum Ablegen von Kleinteilen auf.

Kleinteile können z.B. ein Zettel, ein Schlüssel, ein Handy, ein Tabletcomputer, oder ein eBook sein.

Andere persönlich durch den Nutzer mitgeführte, ablagefähige Kleinteile sind ebenfalls denkbar.

Ferner umfasst das Mittelteil 340 eine Objekthalterung 350 in Form von drei Klemmlippen 352 aus Gummi zum Verklemmen eines Tabletcomputers oder eines eBooks an die Ablageausbuchtung 348 oder die Ablagefläche 346.

Die Ablagefläche 346 weist eine Aussparung 347 auf, die es erlaubt, ein in die Ablagefläche 346 eingesetztes Element wie einen Tabletcomputer leichter greifen und damit entnehmen zu können.

Die Klemmlippen 352 sind an dem Mittelteil 340 befestigt und ragen in die Ablagefläche 346 und in die Ablageausbuchtung 348 hinein.

Zudem weisen die Ablageausbuchtung 348 und die Ablagefläche 346 im montierten und betriebsfertigen Zustand der Schiebegriffeinheit 310 einen Winkel zwischen ca. 0° und ca. 75° zu einer horizontalen Bezugsebene auf.

Im Übrigen sind die Greifeinheiteinsätze 328a, 328b gemäß Fig. 16 schematisch in Explosionsdarstellung gezeigt.

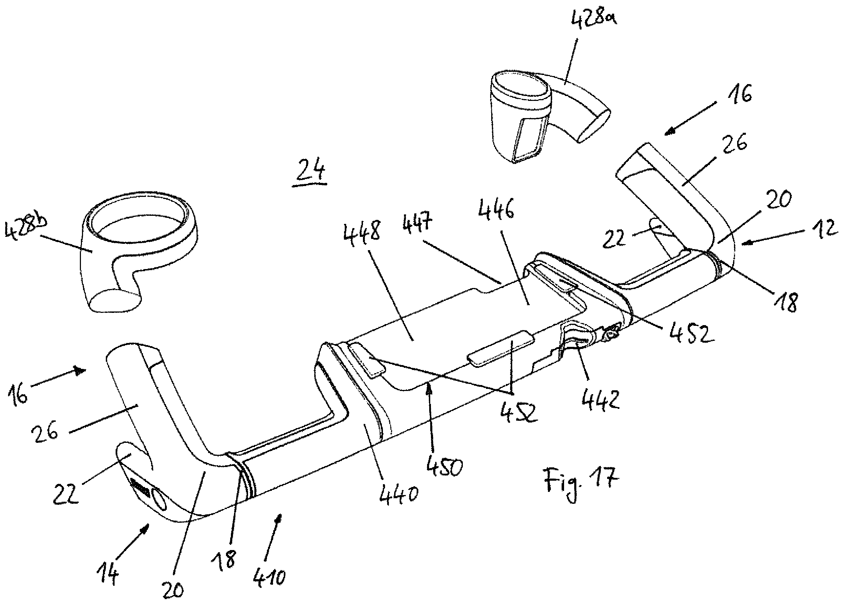

Fig. 17 zeigt eine perspektivische Ansicht eines fünften Ausführungsbeispiels einer erfindungsgemäßen Schiebegriffeinheit 410.

Das in Fig. 17 dargestellte Ausführungsbeispiel der erfindungsgemäßen Schiebegriffeinheit 410 weist im Wesentlichen dieselben strukturellen und funktionalen Merkmale wie das in Fig. 15 dargestellte Ausführungsbeispiel der Schiebegriffeinheit 210 auf.

Lediglich die folgenden strukturellen Merkmalsunterschiede sollen aufgezeigt werden:
Das Mittelteil 440 der Querstrebe 438 weist eine ausgesparte Ablagefläche 446 mit Aussparung 447 sowie eine ausgesparte Ablageausbuchtung 448 (nicht in Fig. 17 erkennbar) zum Ablegen von Kleinteilen auf.

Kleinteile können z.B. ein Zettel, ein Schlüssel, ein Handy, ein Tabletcomputer, oder ein eBook sein.

Andere persönlich durch den Nutzer mitgeführte, ablagefähige Kleinteile sind ebenfalls denkbar.

Ferner umfasst das Mittelteil 440 eine Objekthalterung 450 in Form von drei Klemmlippen 452 aus Gummi zum Verklemmen eines Tabletcomputers 54 oder eines eBooks 54 an die Ablageausbuchtung 448 oder die Ablagefläche 446.

Die Klemmlippen 452 sind an dem Mittelteil 440 befestigt und ragen in die Ablagefläche 446 und in die Ablageausbuchtung 448 hinein.

Zudem weisen die Ablageausbuchtung 448 und die Ablagefläche 446 im montierten und betriebsfertigen Zustand der Schiebegriffeinheit 410 einen Winkel zwischen ca. 0° und ca. 75° zu einer horizontalen Bezugsebene auf.

Im Übrigen sind die Greifeinheiteinsätze 428a, 428b gemäß Fig. 16 schematisch in Explosionsdarstellung gezeigt.

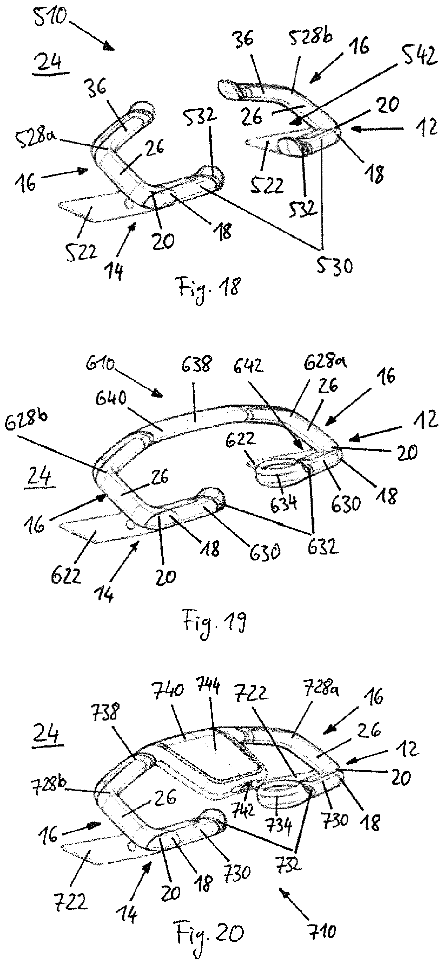

Fig. 18 zeigt eine perspektivische Darstellung eines sechsten Ausführungsbeispiels einer erfindungsgemäßen Schiebegriffeinheit 510.

Das in Fig. 18 dargestellte Ausführungsbeispiel der erfindungsgemäßen Schiebegriffeinheit 510 weist im Wesentlichen dieselben strukturellen und funktionalen Merkmale wie das in den Fig. 1a bis Fig. 6 dargestellte Ausführungsbeispiel der Schiebegriffeinheit 10 auf.

Lediglich die folgenden strukturellen Merkmalsunterschiede sollen aufgezeigt werden:
Das erste Endstück 12 und das zweite Endstück 14 sind als freistehende Endstücke 12, 14 ausgebildet.

Die Schiebegriffeinheit 510 weist demnach keine Querstrebe 38 und kein Mittelteil 40 auf, welche das erste Endstück 12 und das zweite Endstück 14 miteinander verbinden.

Ferner bildet die Horizontalansatzstückaufnahme 530 jeweils im Wesentlichen die horizontal ausgerichtete Greifeinheit aus, die als freistehende horizontal ausgerichtete Greifeinheit ausgebildet ist.

An dem Greifeinheiteinsatz 528a, 528b ist ferner jeweils eine weitere freistehende Greifeinheit 36 einstückig angeformt.

Die Greifeinheiten 16, 36, der bogenförmige Eckknoten 20 und das Horizontalansatzstück 18 bilden demnach eine im Wesentlichen C-förmige Anordnung aus.

Das Münzpfandsystem 542 ist zudem zwischen einer Greifeinheit 16 und einer Befestigungseinrichtung 522 angeordnet und der Halterungsbogen für die Diebstahlsicherungskette an einer Außenoberfläche eines bogenförmigen Eckknotens 20 angeordnet.

Die Befestigungseinrichtung 522 ist sowohl an dem Eckknoten 20 als auch zusätzlich an der freistehenden, aufragenden Greifeinheit 16 und dem Horizontalansatzstück 18 einstückig angeformt.

Fig. 19 zeigt eine perspektivische Darstellung eines siebten Ausführungsbeispiels einer erfindungsgemäßen Schiebegriffeinheit 610.

Das in Fig. 19 dargestellte Ausführungsbeispiel der erfindungsgemäßen Schiebegriffeinheit 610 weist im Wesentlichen dieselben strukturellen und funktionalen Merkmale wie das in Fig. 18 dargestellte Ausführungsbeispiel der Schiebegriffeinheit 510 auf.

Lediglich die folgenden strukturellen Merkmalsunterschiede sollen aufgezeigt werden:
An dem Greifeinheiteinsatz 628a und an dem Greifeinheiteinsatz 628b ist eine Querstrebe 638 einstückig angeformt, mittels welcher das erste und das zweite Endstück 12, 14 miteinander verbunden sind.

Zudem ist an einem Horizontalansatzstückeinsatz 632 eine Objekthalterung 634 einstückig angeformt, wohingegen an einem anderen Horizontalansatzstückeinsatz 632 eine Griffkappe einstückig angeformt ist.

Die Objekthalterung 634 ist als Getränkebecherhalterung oder Lupenhalterung ausgebildet.

Fig. 20 zeigt eine perspektivische Darstellung eines achten Ausführungsbeispiels einer erfindungsgemäßen Schiebegriffeinheit 710.

Das in Fig. 20 dargestellte Ausführungsbeispiel der erfindungsgemäßen Schiebegriffeinheit 710 weist im Wesentlichen dieselben strukturellen und funktionalen Merkmale wie das in Fig. 19 dargestellte Ausführungsbeispiel der Schiebegriffeinheit 610 auf.

Lediglich die folgenden strukturellen Merkmalsunterschiede sollen aufgezeigt werden:
Das Mittelteil 740 der Querstrebe 738 ist als ein in Richtung der freistehenden horizontal ausgerichteten Greifeinheiten zugewandter Vorsprung ausgebildet.

Das Mittelteil 740 weist zudem ein Münzpfandsystem 742 und eine Anzeigeeinrichtung 744 auf.

Zudem ist an beiden Horizontalansatzstückeinsätzen 732 eine Griffkappe einstückig angeformt.

### Bezugszeichenliste

- 10: Schiebegriffeinheit
- 12: Erstes Endstück
- 14: Zweites Endstück
- 16: freistehende, aufragende Greifeinheit
- 18: Horizontalansatzstück
- 20: bogenförmiger Eckknoten
- 22: Befestigungseinrichtung
- 24: von Hand geführter Transportwagen
- 26: Greifeinheitaufnahme
- 28a: Greifeinheiteinsatz
- 28b: Greifeinheiteinsatz
- 30: Horizontalansatzstückaufnahme
- 32: Horizontalansatzstückeinsatz
- 34: Objekthalterung
- 34a: Objekthalterung/Lupenhalterung
- 36: weitere freistehende Greifeinheit
- 38: Querstrebe
- 40: Mittelteil
- 42: Münzpfandsystem
- 44: Anzeigeeinrichtung
- 50: Objekthalterung

- 110: Schiebegriffeinheit
- 128a: Greifeinheiteinsatz
- 128b: Greifeinheiteinsatz

- 210: Schiebegriffeinheit
- 228a: Greifeinheiteinsatz
- 228b: Greifeinheiteinsatz
- 234: Objekthalterung
- 234a: Objekthalterung Getränkebecher
- 234b: Objekthalterung Scanner

- 310: Schiebegriffeinheit
- 328a: Greifeinheiteinsatz
- 328b: Greifeinheiteinsatz
- 338: Querstrebe
- 340: Mittelteil
- 342: Münzpfandsystem
- 346: ausgesparte Ablagefläche
- 347: Aussparung
- 348: ausgesparte Ablageausbuchtung
- 350: Objekthalterung
- 352: Klemmlippe

- 410: Schiebegriffeinheit
- 428a: Greifeinheiteinsatz
- 428b: Greifeinheiteinsatz
- 438: Querstrebe
- 440: Mittelteil
- 442: Münzpfandsystem
- 446: ausgesparte Ablagefläche
- 447: Aussparung
- 448: ausgesparte Ablageausbuchtung
- 450: Objekthalterung
- 452: Klemmlippe

- 510: Schiebegriffeinheit
- 522: Befestigungseinrichtung
- 528a: Greifeinheiteinsatz
- 528b: Greifeinheiteinsatz
- 530: Horizontalansatzstückaufnahme
- 532: Horizontalansatzstückeinsatz
- 542: Münzpfandsystem

- 610: Schiebegriffeinheit
- 622: Befestigungseinrichtung
- 628a: Greifeinheiteinsatz
- 628b: Greifeinheiteinsatz
- 630: Horizontalansatzstückaufnahme
- 632: Horizontalansatzstückeinsatz
- 634: Objekthalterung
- 638: Querstrebe
- 640: Mittelteil
- 642: Münzpfandsystem

- 710: Schiebegriffeinheit
- 722: Befestigungseinrichtung
- 728a: Greifeinheiteinsatz
- 728b: Greifeinheiteinsatz
- 730: Horizontalansatzstückaufnahme
- 732: Horizontalansatzstückeinsatz
- 734: Objekthalterung
- 738: Querstrebe
- 740: Mittelteil
- 742: Münzpfandsystem
- 744: Anzeigeeinrichtung

## Patentansprüche

1. Schiebegriffeinheit (10, 110, 210, 310, 410, 510, 610, 710), insbesondere mehrteilige Schiebegriffeinheit (10, 110, 210, 310, 410, 510, 610, 710), mit wenigstens einem ersten und mit wenigstens einem zweiten Endstück (12, 14), wobei jedes Endstück (12, 14) wenigstens eine freistehende, aufragende Greifeinheit (16), wenigstens ein Horizontalansatzstück (18), wenigstens einen bogenförmigen Eckknoten (20) sowie wenigstens eine Befestigungseinrichtung (22, 522, 622, 722) zum Befestigen des jeweiligen Endstücks (12, 14) an einen von Hand geführten Transportwagen (24) aufweist, wobei die freistehende, aufragende Greifeinheit (16) wenigstens aus einer Greifeinheitaufnahme (26) und wenigstens aus einem Greifeinheiteinsatz (28a, 28b; 128a, 128b; 228a, 228b; 528a, 528b; 628a, 628b; 728a, 728b) besteht, wobei das Horizontalansatzstück (18) und die Greifeinheitaufnahme (26) an dem bogenförmigen Eckknoten (20) derart angeformt sind, dass mittels des bogenförmigen Eckknotens (20) ein stufenfreier Übergang zwischen dem Horizontalansatzstück (18) und der Greifeinheit (16) ausgebildet ist,
**dadurch gekennzeichnet, dass**
die Befestigungseinrichtung (22) an einem gekrümmten Abschnitt des bogenförmigen Eckknotens (20), insbesondere einstückig, angeformt ist.

2. Schiebegriffeinheit (10, 110, 210, 310, 410, 510, 610, 710) nach Anspruch 1, **dadurch gekennzeichnet, dass** der bogenförmige Eckknoten (20) und das Horizontalansatzstück (18) und/oder der bogenförmige Eckknoten (20) und die Greifeinheit (16) wenigstens abschnittsweise dieselbe Querschnittsgeometrie aufweisen.

3. Schiebegriffeinheit (10, 110, 210, 310, 410, 510, 610, 710) nach einem der vorhergehenden Ansprüche, **dadurch gekennzeichnet, dass** das Horizontalansatzstück (18) im an den von Hand geführten Transportwagen (24) montierten und betriebsfertigen Zustand der Schiebegriffeinheit (10, 110, 210, 310, 410, 510, 610, 710) horizontal ausgerichtet ist, sodass das Horizontalansatzstück (18), der bogenförmige Eckknoten (20) und die freistehende, aufragende Greifeinheit (16) eine im Wesentlichen L-förmige Anordnung ausbilden.

4. Schiebegriffeinheit (10, 110, 210, 310, 410, 510, 610, 710) nach einem der vorhergehenden Ansprüche, **dadurch gekennzeichnet, dass** das Horizontalansatzstück (18) wenigstens aus einer Horizontalansatzstückaufnahme (30, 530, 630, 730) und wenigstens aus einem Horizontalansatzstückeinsatz (32, 532, 632, 732) besteht, wobei ferner die Greifeinheitaufnahme (26) und die Horizontalansatzstückaufnahme (30, 530, 630, 730) an dem bogenförmigen Eckknoten (20), insbesondere einstückig, angeformt sind.

5. Schiebegriffeinheit (10, 110, 210, 310, 410, 510, 610, 710) nach Anspruch 4, **dadurch gekennzeichnet, dass** der Greifeinheiteinsatz (28a, 28b; 128a, 128b; 228a, 228b; 528a, 528b; 628a, 628b; 728a, 728b) in die Greifeinheitaufnahme (26) und der Horizontalansatzstückeinsatz (32, 532, 632, 732) in die Horizontalansatzstückaufnahme (30, 530, 630, 730) einsetzbar und/oder einschiebbar und/oder einklemmbar und/oder verrastbar und/oder klipsbar und/oder verschraubbar und/oder vernietbar und/oder klebbar sind, wobei an dem Greifeinheiteinsatz (28a, 228a, 228b) und/oder an dem Horizontalansatzstückeinsatz (632) wenigstens eine Objekthalterung (34, 234, 634, 734), insbesondere einstückig, angeformt ist.

6. Schiebegriffeinheit (10, 210, 410, 610) nach Anspruch 5, **dadurch gekennzeichnet, dass** die Objekthalterung (34, 234, 634, 734) als eine Halterung für wenigstens einen Getränkebecher (34, 234a) und/oder einen Handscanner (234b) und/oder eine Lupe (34a) und/oder Griffkappe ausgebildet ist.

7. Schiebegriffeinheit (510) nach einem der vorhergehenden Ansprüche, **dadurch gekennzeichnet, dass** an dem Greifeinheiteinsatz (528a, 528b) eine weitere freistehende Greifeinheit (36), insbesondere einstückig, angeformt ist, so dass die Greifeinheiten (16, 36), der bogenförmige Eckknoten (20) und das Horizontalansatzstück (18) eine im Wesentlichen C-förmige Anordnung ausbilden.

8. Schiebegriffeinheit (10, 110, 210, 310, 410, 610, 710) nach einem der vorhergehenden Ansprüche, **dadurch gekennzeichnet, dass** das erste und zweite Endstück (12, 14) mittels einer Querstrebe (38, 338, 438, 638, 738) verbunden sind, die an dem Greifeinheiteinsatz (628a, 628b; 728a, 728b) und/oder an dem Horizontalansatzstückeinsatz (32) angeformt ist.

9. Schiebegriffeinheit (10, 110, 210, 310, 410, 610, 710) nach Anspruch 8, **dadurch gekennzeichnet, dass** die Querstrebe (38, 338, 438, 638, 738) ein Mittelteil (40, 340, 440, 640, 740) umfasst, das ein Münzpfandsystem (42, 342, 442, 742) und/oder eine Anzeigeeinrichtung (44, 744) aufweist.

10. Schiebegriffeinheit (310, 410) nach Anspruch 9, **dadurch gekennzeichnet, dass** das Mittelteil (4340, 440) eine ausgesparte Ablagefläche (346, 446) sowie eine ausgesparte Ablageausbuchtung (348, 448) zum Ablegen von Kleinteilen aufweist.

11. Schiebegriffeinheit (310, 410) nach Anspruch 10, **dadurch gekennzeichnet, dass** das Mittelteil (340, 440) eine Objekthalterung (350, 450) in Form von wenigstens drei Klemmlippen (352, 452) aus Kunststoff, insbesondere aus Gummi, aufweist, zum Verklemmen wenigstens eines plattenförmigen Objekts (54), insbesondere ein Tabletcomputer und/oder ein eBook, an die Ablageausbuchtung (348, 448) und/oder die Ablagefläche (346, 446).

12. Schiebegriffeinheit (310, 410) nach Anspruch 10 oder 11, **dadurch gekennzeichnet, dass** die Ablageausbuchtung (348, 448) und/oder die Ablagefläche (346, 446) im montierten und betriebsfertigen Zustand der Schiebegriffeinheit (310, 410) einen Winkel zwischen ca. 0° und ca. 85°, insbesondere zwischen ca. 0° und ca. 75°, zu einer horizontalen Bezugsebene aufweisen.

13. Schiebegriffeinheit (10, 110, 210, 310, 410, 510, 610, 710) nach einem der vorhergehenden Ansprüche, **dadurch gekennzeichnet, dass** die Schiebegriffeinheit (10, 110, 210, 310, 410, 510, 610, 710) aus wenigstens einem spritzgießbaren Kunststoff hergestellt ist.

14. Schiebegriffeinheit (10, 110, 210, 310, 410, 510, 610, 710) nach einem der vorhergehenden Ansprüche, **dadurch gekennzeichnet, dass** die Schiebegriffeinheit (10, 110, 210, 310, 410, 510, 610, 710) wenigstens teilweise mittels eines 2-Komponenten-Spritzgussverfahrens hergestellt ist.

## Claims

1. Push bar unit (10, 110, 210, 310, 410, 510, 610, 710), in particular multiple-part push bar unit (10, 110, 210, 310, 410, 510, 610, 710), having at least one first end piece (12) and having at least one second end piece (14), wherein each end piece (12, 14) has at least one self-supporting, upwardly protruding handle unit (16), at least one horizontal attachment piece (18), at least one arcuate corner node (20), as well as at least one fastening installation (22, 522, 622, 722) for fastening the respective end piece (12, 14) to a manually guided transport cart (24), wherein the self-supporting, upwardly protruding handle unit (16) is composed at least of one handle unit receptacle (26) and at least of one handle unit insert (28a, 28b; 128a, 128b; 228a, 228b; 528a, 528b; 628a, 628b; 728a, 728b), wherein the horizontal attachment piece (18) and the handle unit receptacle (26) are integrally moulded on the arcuate corner node (20) in such a manner that a stepless transition between the horizontal attachment piece (18) and the handle unit (16) is configured by means of the arcuate corner node (20), **characterized in that** the fastening installation (22) is moulded, in particular integrally moulded, on a curved portion of the arcuate corner node (20).

2. Push bar unit (10, 110, 210, 310, 410, 510, 610, 710) according to Claim 1, **characterized in that** the arcuate corner node (20) and the horizontal attachment piece (18) and/or the arcuate corner node (20) and the handle unit (16) at least in portions have the same cross-sectional geometry.

3. Push bar unit (10, 110, 210, 310, 410, 510, 610, 710) according to one of the preceding claims, **characterized in that** the horizontal attachment piece (18) in the state of the push bar unit (10, 110, 210, 310, 410, 510, 510, 710) assembled and operationally ready on the manually guided transport cart (24) is horizontally aligned such that the horizontal attachment piece (18), the arcuate corner node (20) and the self-supporting, upwardly protruding handle unit (16) configure a substantially L-shaped arrangement.

4. Push bar unit (10, 110, 210, 310, 410, 510, 610, 710) according to one of the preceding claims, **characterized in that** the horizontal attachment piece (18) is composed at least of one horizontal attachment piece receptacle (30, 530, 630, 730) and at least of one horizontal attachment piece insert (32, 532, 632, 732), wherein furthermore the handle unit receptacle (26) and the horizontal attachment piece receptacle (30, 530, 630, 730) are moulded, in particularly integrally moulded, on the arcuate corner node (20).

5. Push bar unit (10, 110, 210, 310, 410, 510, 610, 710) according to Claim 4, **characterized in that** the handle unit insert (28a, 28b; 128a, 128b; 228a, 228b; 528a, 528b; 628a, 628b; 728a, 728b) is able to be inserted and/or pushed into and/or jammed and/or latched and/or snap-fitted in and/or screwed and/or riveted and/or adhesively bonded to the handle unit receptacle (26), and the horizontal attachment piece insert (32, 532, 632, 732) is able to be inserted and/or pushed into and/or jammed and/or latched and/or snap-fitted in and/or screwed and/or riveted and/or adhesively bonded to the horizontal attachment piece receptacle (30, 530, 630, 730), wherein at least one object holder (34, 234, 634, 734) is moulded, in particular integrally moulded, on the horizontal attachment piece insert (632) .

6. Push bar unit (10, 210, 410, 610) according to Claim 5, **characterized in that** the object holder (34, 234, 634, 734) is configured as a holder for at least one beverage cup (34, 234a) and/or a hand-held scanner (234b) and/or a magnifying glass (34a) and/or a bar cap.

7. Push bar unit (510) according to one of the preceding claims, **characterized in that** a further self-supporting handle unit (36) is moulded, in particular integrally moulded, on the handle unit insert (528a, 528b) such that the handle units (16, 36), the arcuate corner node (20) and the horizontal attachment piece (18) configure a substantially C-shaped arrangement.

8. Push bar unit (10, 110, 210, 310, 410, 610, 710) according to one of the preceding claims, **characterized in that** the first end piece (12) and the second end piece (14) are connected by means of a cross brace (38, 338, 438, 638, 738) which is moulded on the handle unit insert (628a, 628b; 728a, 728b) and/or on the horizontal attachment piece insert (32).

9. Push bar unit (10, 110, 210, 310, 410, 610, 710) according to Claim 8, **characterized in that** the cross brace (38, 338, 438, 638, 738) comprises a central part (40, 340, 440, 640, 740) which has a coin deposit system (42, 342, 442, 742) and/or a display installation (44, 744).

10. Push bar unit (310, 410) according to Claim 9, **characterized in that** the central part (4340, 440) has a recessed storage area (346, 446) and a recessed storage convexity (348, 448) for storing small items.

11. Push bar unit (310, 410) according to Claim 10, **characterized in that** the central part (340, 440) has an object holder (350, 450) in the form of at least three clamping lips (352, 452) of plastics material, in particular of rubber, for clamping at least one board-shaped object (54), in particular a tablet computer and/or an eBook, to the storage convexity (348, 448) and/or the storage area (346, 446) .

12. Push bar unit (310, 410) according to Claim 10 or 11, **characterized in that** the storage convexity (348, 448) and/or the storage area (346, 446) in the assembled and operationally ready state of the push bar unit (310, 410) in relation to a horizontal reference plane have/has an angle between approx. 0° and approx. 85°, in particular between approx. 0° and approx. 75°.

13. Push bar unit (10, 110, 210, 310, 410, 510, 610, 710) according to one of the preceding claims, **characterized in that** the push handle unit (10, 110, 210, 310, 410, 510, 610, 710) is produced from at least one injection-moulding capable plastics material.

14. Push bar unit (10, 110, 210, 310, 410, 510, 610, 710) according to one of the preceding claims, **characterized in that** the push bar unit (10, 110, 210, 310, 410, 510, 610, 710) is at least partially produced by means of a bi-component injection-moulding method.

## Revendications

1. Unité formant poignée de poussée (10, 110, 210, 310, 410, 510, 610, 710), en particulier unité formant poignée de poussée (10, 110, 210, 310, 410, 510, 610, 710) en plusieurs parties, dotée d'au moins une première et d'au moins une deuxième pièce d'extrémité (12, 14), chaque pièce d'extrémité (12, 14) présentant au moins une unité de préhension (16) autoportante, faisant saillie vers le haut, au moins une rallonge horizontale (18), au moins un nœud de coin (20) arqué ainsi qu'au moins un dispositif de fixation (22, 522, 622, 722) servant à la fixation de la pièce d'extrémité (12, 14) respective à un chariot de transport (24) guidé à la main, l'unité de préhension (16) autoportante, faisant saillie vers le haut, étant constituée au moins d'un logement d'unité de préhension (26) et au moins d'un insert d'unité de préhension (28a, 28b ; 128a, 128b ; 228a, 228b ; 528a, 528b ; 628a, 628b ; 728a, 728b), la rallonge horizontale (18) et le logement d'unité de préhension (26) étant formés sur le nœud de coin (20) arqué, de telle sorte qu'une transition continue soit formée entre la rallonge horizontale (18) et l'unité de préhension (16) au moyen du nœud de coin (20) arqué,
**caractérisée en ce que**
le dispositif de fixation (22) est formé, en particulier d'une seule pièce, sur un tronçon incurvé du nœud de coin (20) arqué.

2. Unité formant poignée de poussée (10, 110, 210, 310, 410, 510, 610, 710) selon la revendication 1, **caractérisé en ce que** le nœud de coin (20) arqué et la rallonge horizontale (18) et/ou le nœud de coin (20) arqué et l'unité de préhension (16) présentent au moins dans certaines régions la même géométrie de section transversale.

3. Unité formant poignée de poussée (10, 110, 210, 310, 410, 510, 610, 710) selon l'une des revendications précédentes, **caractérisée en ce que** la rallonge horizontale (18) est orientée horizontalement dans l'état de l'unité formant poignée de poussée (10, 110, 210, 310, 410, 510, 610, 710) monté sur le chariot de transport (24) guidé à la main et prêt à l'emploi, de sorte que la rallonge horizontale (18), le nœud de coin (20) arqué et l'unité de préhension (16) autoportante, faisant saillie vers le haut, forment un ensemble sensiblement en forme de L.

4. Unité formant poignée de poussée (10, 110, 210, 310, 410, 510, 610, 710) selon l'une des revendications précédentes, **caractérisée en ce que** la rallonge horizontale (18) est constituée au moins d'un logement de rallonge horizontale (30, 530, 630, 730) et au moins d'un insert de rallonge horizontale (32, 532, 632, 732), en outre le logement d'unité de préhension (26) et le logement de rallonge horizontale (30, 530, 630, 730) étant formés, en particulier d'une seule pièce, sur le nœud de coin (20) arqué.

5. Unité formant poignée de poussée (10, 110, 210, 310, 410, 510, 610, 710) selon la revendication 4, **caractérisée en ce que** l'insert d'unité de préhension (28a, 28b ; 128a, 128b ; 228a, 228b ; 528a, 528b ; 628a, 628b ; 728a, 728b) peut être inséré et/ou peut être introduit et/ou peut être serré et/ou peut être encliqueté et/ou peut être enclipsé et/ou peut être vissé et/ou peut être rivé et/ou peut être collé dans le logement d'unité de préhension (26) et l'insert de rallonge horizontale (32, 532, 632, 732) peut être inséré et/ou peut être introduit et/ou peut être serré et/ou peut être encliqueté et/ou peut être enclipsé et/ou peut être vissé et/ou peut être rivé et/ou peut être collé dans le logement de rallonge horizontale (30, 530, 630, 730), au moins un support d'objet (34, 234, 634, 734), étant formé, en particulier d'une seule pièce, sur l'insert d'unité de préhension (28a, 228a, 228b) et/ou sur l'insert de rallonge horizontale (632).

6. Unité formant poignée de poussée (10, 210, 410, 610) selon la revendication 5, **caractérisée en ce que** le support d'objet (34, 234, 634, 734) est formé sous la forme d'un support pour au moins un gobelet pour boisson (34, 234a) et/ou un scanner à main (234b) et/ou une loupe (34a) et/ou un capuchon de poignée.

7. Unité formant poignée de poussée (510) selon l'une des revendications précédentes, **caractérisée en ce qu'**une autre unité de préhension (36) autoportante est formée, en particulier d'une seule pièce, sur l'insert d'unité de préhension (528a, 528b), de sorte que les unités de préhension (16, 36), le nœud de coin (20) arqué et la rallonge horizontale (18) forment un ensemble sensiblement en forme de C.

8. Unité formant poignée de poussée (10, 110, 210, 310, 410, 510, 610, 710) selon l'une des revendications précédentes, **caractérisée en ce que** la première et la deuxième pièce d'extrémité (12, 14) sont reliées au moyen d'une traverse (38, 338, 438, 638, 738) qui est formée sur l'insert d'unité de préhension (628a, 628b ; 728a, 728b) et/ou sur l'insert de rallonge horizontale (32).

9. Unité formant poignée de poussée (10, 110, 210, 310, 410, 610, 710) selon la revendication 8, **caractérisée en ce que** la traverse (38, 338, 438, 638, 738) comprend une partie centrale (40, 340, 440, 640, 740) qui présente un système de consignation (42, 342, 442, 742) et/ou un dispositif d'affichage (44, 744).

10. Unité formant poignée de poussée (310, 410) selon la revendication 9, **caractérisée**
**en ce que** la partie centrale (4340, 440) présente une surface de réception (346, 446) évidée ainsi qu'un renflement de réception (348, 448) évidé pour la réception de petits articles.

11. Unité formant poignée de poussée (310, 410) selon la revendication 10, **caractérisée en ce que** la partie centrale (340, 440) présente un support d'objet (350, 450) sous la forme d'au moins trois lèvres de serrage (352, 452) en matière synthétique, en particulier en caoutchouc, pour le serrage d'au moins un objet (54) en forme de plaque, en particulier d'une tablette électronique et/ou d'un livre électronique, sur le renflement de réception (348, 448) et/ou la surface de réception (346, 446).

12. Unité formant poignée de poussée (310, 410) selon la revendication 10 ou 11, **caractérisée en ce que** le renflement de réception (348, 448) et/ou la surface de réception (346, 446) forment un angle entre environ 0° et environ 85°, en particulier entre environ 0° et environ 75°, par rapport à un plan de référence horizontal dans l'état monté et prêt à l'emploi de l'unité formant poignée de poussée (310, 410).

13. Unité formant poignée de poussée (10, 110, 210, 310, 410, 510, 610, 710) selon l'une des revendications précédentes, **caractérisée en ce que** l'unité formant poignée de poussée (10, 110, 210, 310, 410, 510, 610, 710) est fabriquée à partir d'au moins une matière synthétique pouvant être moulée par injection.

14. Unité formant poignée de poussée (10, 110, 210, 310, 410, 510, 610, 710) selon l'une des revendications précédentes, **caractérisée en ce que** l'unité formant poignée de poussée (10, 110, 210, 310, 410, 510, 610,710) est fabriquée au moins partiellement par le biais d'un procédé de moulage par injection à 2 composants.
